# EUROPÄISCHE PATENTANMELDUNG

(11) **EP 0 739 791 A2**
(43) Veröffentlichungstag der Anmeldung: **30.10.1996**
(21) Anmeldenummer: 96105852.6
(22) Anmeldetag: 15.04.1996
(51) Int. Cl.: B60R 22/18

(54) **Kunststoff/Metall-Gurtumlenkbeschläge**

(30) Priorität: 27.04.1995 DE 19515562
(71) Anmelder: HOECHST AKTIENGESELLSCHAFT, 65929 Frankfurt am Main (DE)
(72) Erfinder: Reil, Frank, 64579 Gernsheim (DE); Reuter, Frank, 63762 Grossostheim (DE); Haack, Ulrich, 64665 Alsbach-Hähnlein (DE); Gibbert, Wolfgang, 63075 Offenbach (DE)

(57) **Zusammenfassung**

Es wird ein Gurtumlenkbeschlag beschrieben, der eine Kunststoffabdeckung mit einer durchgehenden Aussparung an der Außenkante aufweist. Durch die Aussparung in dem Kunststoffteil wird ein Reißen vermieden.

## Beschreibung

Gurtumlenkbeschläge für Sicherheitsgurte in Automobilen bestehen gewöhnlich aus einem Metallbügel, der mit einem Kunststoff ummantelt ist, um Metallkanten abzudecken und bei großer Belastung eine Beschädigung des Sicherheitsgurtes durch den Gurtumlenkbeschlag zu verhindern.

Im folgenden wird die Kunststoffummantelung von Gurtumlenkbeschlägen auch als Kunsstoffteil oder Kunststoffabdeckung bezeichnet.

Als Kunststoffmaterial wird häufig Polyacetal verwendet, das aufgrund hoher Verschleiß- und Abriebfestigkeit und außerdem hoher Zähigkeit gut für eine Ummantelung des Metallteiles bei Gurtumlenkbeschlägen geeignet ist. Bisher werden die Metallteile der Gurtumlenkbeschläge im Bereich der Gurtberührung von dem Kunststoff vollständig umschlossen.

Häufig bilden sich in der Kunststoffummantelung schon bei der Herstellung Risse. Dieses Problem tritt besonders bei Verwendung von Polyacetalen, die Ruß und UV-Stabilisatoren enthalten, hervor, da mit steigendem Gehalt solcher Zusätze die Zähigkeit des Kunststoffes vermindert wird.

Bedingt durch die Volumenkontraktion des Kunststoffes während des Abkühlvorgangs, schwindet das Material auf den Metallbügel auf. Daraus resultieren sehr große Spannungen. Überlagern sich diese Spannungen mit den Spannungen, die bei einem Temperaturwechsel aufgrund der unterschiedlichen Ausdehnungen des Metalls und des Kunststoffes auftreten, so ergeben sich sehr hohe Spannungen und der Kunststoff kann reißen. Diese Risse im Kunststoffteil können bei einem Unfall zu einer starken Schädigung das Gurtbandes führen.

Kunststoffteile, die interne Spannungen aufweisen, können bei einer hohen Belastung reißen oder platzen. Die bei einem Aufprall oder Zusammenstoß auftretenden außerordentlich hohen Belastungen können zu einem teilweisen oder völligen Abplatzen des Kunststoffteiles führen und dabei entstehende Kunststoffkanten oder freigelegte Metallkanten können zu einem Durchtrennen des Gurtbandes führen.

Aufgabe der Erfindung war es, durch eine konstruktive Änderung des Kunststoffteiles bei Gurtumlenkbeschlägen Schwindungsspannungen und bei Temperaturwechsel auftretende Spannungen im Kunststoffteil wesentlich zu reduzieren und eine Rißbildung im Kunststoffteil zu verhindern.

Es wurde gefunden, daß eine Rißbildung im Kunststoffteil vermieden werden kann, wenn das Kunststoffteil das Metallteil nicht vollständig umschließt. Der Kunststoff kann so ohne Spannungsaufbau schwinden. Die Aufgabe wird ebenso gelöst, wenn das Kunststoffteil das Metallteil zwar umschließt, aber in dem Kunststoffteil dünnwandige Bereiche im Kunststoff an den Stellen mit den größten Schwindungsspannungen eines Gurtumlenkbeschlages für eine Sollbruchstelle sorgen, so daß ein Reißen an dieser Sollbruchstelle nicht zu einer Beeinträchtigung der Funktion des Kunststoffteiles führt.

Gegenstand der Erfindung ist somit ein Gurtumlenkbeschlag, der ein Metallteil und eine Kunststoffabdeckung enthält, wobei die Kunststoffabdeckung mindestens eine durchgehende Aussparung im Bereich der Außenkante des Metallteiles aufweist.

Das Metallteil, das einen Metallbügel darstellt, der den Gurt trägt, wird so von einem Kunststoff abgedeckt, daß die dem Gurt nächstliegende Metallkante von einem Kunststoff mit großer Gurtauflagefläche abgedeckt ist und das Metallteil weitgehend oder teilweise durch Kunststoff abgedeckt wird. Erfindungsgemäß enthält die Kunststoffabdeckung eine Aussparung, die zum Beispiel entlang der Außenkante des Gurtumlenkbeschlages oder seitlich zur Außenkante verläuft. Die Aussparung kann die Form einer Nut haben. Die Aussparung kann die Kunststoffabdeckung unterbrechen oder einen dünnwandigen Bereich in der Kunststoffabdeckung bilden. Der dünnwandige Bereich kann beispielsweise eine Kunststoff-Haut sein.

In der Regel reißen die Kunststoffteile der Gurtumlenkbeschläge im Bereich der größten Schwindungsspannung. Für die Vermeidung einer beschädigenden Rißbildung im Kunststoffteil genügt eine Aussparung im Außenbreich, das heißt im Bogen zwischen den Enden der Längsseiten. Die Kunststoffabdeckung kann daher bogenförmige Aussparungen zwischen den Enden der Längsseiten des Gurtumlenkbeschlages aufweisen.

Ein weiterer Gegenstand der Erfindung ist somit ein Gurtumlenkbeschlag, der aus einem Metallteil und einer Kunststoffabdeckung besteht, wobei die Kunststoffabdeckung eine Aussparung in Form einer unterbrochenen Nut aufweist.

Für die Kunststoffabdeckung sind thermoplastische Kunststoffe wie Polyamid, Polyester oder Polyacetal geeignet.

Polyamide sind Kunststoffe, die Polymere enthalten, deren Einheiten durch Amid-Bindungen verknüpft sind. Beispiele für Polyamide, deren Eigenschaften und Herstellung sind in "Ullmann's Encyclopedia od Industrial Chemistry, B. Elvers (Ed.), 5. Auflage, Volume A21, "Polyamides", VCH Verlagsgesellschaft, Weinheim 1992; S. 179-205" beschrieben, worauf hiermit Bezug genommen wird.

Polyester sind Kunststoffe, die Polymere enthalten, deren Einheiten durch Ester-Bindungen verknüpft sind. Beispiele für Polyester, deren Eigenschaften und Herstellung sind in "Ullmann's Encyclopedia od Industrial Chemistry, B. Elvers (Ed.), 5. Auflage, Volume A21, "Polyesters", VCH Verlagsgesellschaft, Weinheim 1992; S. 227-251" beschrieben, worauf hiermit Bezug genommen wird.

Polyacetale sind Kunststoffe, die Polymere enthalten, die Oxymethylen-Einheiten enthalten. Zu den Polyacetalen gehören die Polyoxymethylene. Polyoxymethylene umfassen Homopolymere und Copolymere, die Oxymethylen-Einheiten enthalten. Beispiele für Polyoxymethylene, deren Eigenschaften und Herstellung sind in "Ullmann's Encyclopedia od Industrial Chemistry, B. Elvers (Ed.), 5. Auflage, Volume A21, "Polyoxymethylenes", VCH Verlagsgesellschaft, Weinheim 1992; S. 591 - 603" beschrieben, worauf hiermit Bezug genommen wird.

Besonders geeignet als Material für die Kunststoffabdeckung ist Polyacetal. Vorteilhaft kann schlagzähmodifiziertes Polyacetal verwendet werden. Das Polyacetal kann auch einen Zusatz wie einen Schmierstoff, z.B. Silikonöl, enthalten, der das Gleit- und Abriebverhalten verändert (gleitmodifiziertes Polyacetal).

Das Metallteil ist üblicherweise als Bügel ausgebildet. Zum Beispiel wird das Metallteil durch Stanzen aus einer Metallplatte hergestellt. An dem Metallteil ist im allgemeinen ein Befestigungsloch und eine längliche Öffnung zur Durchführung des Gurtes vorhanden. Die Kante des Metallteiles, die durch die längliche Öffnung gebildet wird und den Gurt trägt, wird z.B. durch eine abgerundete, wulstartige Kunststoffausformung der Kunststoffabdeckung abgedeckt, die möglichst breit ist, so daß der Gurtumlenkbeschlag sich bei Belastung des Gurtes nicht in den Gurt einschneidet.

Die Aussparung im Kunststoffteil gemäß der Erfindung kann beispielsweise eine das Metallteil im Bereich der Außenkante umlaufende oder teilweise umlaufende (partielle) Nut in dem Kunststoffteil sein.

Der Gurtumlenkbeschlag kann die Verwendung eines spritzgußfähigen Kunststoffes durch Umspritzen des Metallteiles mit dem Kunststoff hergestellt werden. Hierbei kann mann so verfahren, daß bei einer konventionellen Spritzgießform die Aussparung im Kunststoffteil durch eine von hinten an das Metallteil herangeführte Werkzeugkante (zusätzliches Teil der Form, etwa Metallplatte mit einer Dicke, die der Breite der Nut entspricht) erzeugt wird. Nach dem Entformen wird der Platz, den die Werkzeugkante abgedeckt hat, freigestellt und der Kunststoff kann ohne Behinderung schwinden. Da die Festigkeit im wesentlichen von der Gurtführungskante des Kunststoffteiles abhängt, ist die Freistellung (Aussparung) umlaufend oder partiell an der unteren und/oder seitlichen Seite anzubringen.

Die Breite der Aussparung in dem Kunststoffteil ist abhängig von dem Schwindungsverhalten des verwendeten Kunststoffes. Sie kann dem Schwindungsweg angepaßt werden. Die Breite der Aussparung ist unkritisch und kann weitgehend variiert werden. Zum Beispiel kann die Breite der Aussparung bei einem Kunststoffteil aus Polyacetal von 100mm Länge 2 mm betragen.

In dem Kunststoffteil können auch mehrere Aussparungen enthalten sein. Im Bereich des Kunststoffteiles, wo der Gurt aufliegt und die höchsten Beanspruchungen des Kunststoffteiles auftreten, sollte parallel zu der längsseitigen Metallkante (Gurtauflageseite oder Gurtführungskante) keine Aussparung enthalten sein. Das Kunststoffteil kann zusätzlich zu der erfindungsgemäßen Aussparung im Kunststoffteil auch weitere Aussparungen aufweisen. Diese zusätzlichen Aussparungen können dem Design oder zur Materialeinsparung dienen. Sie können mit der erfindungsgemäßen Aussparung auch in direkter Verbindung stehen. Eine entsprechend modifizierte Aussparung ändert aber nicht die erfindungsgemäße Funktion.

Die eingesetzten Kunststoffmaterialien können die üblichen Zusatzstoffe wie Füllmittel, UV-Stabilisatoren, Pigmente, Farbstoff oder Verstärkungsstoffe wie Mineral- oder Glasfaser enthalten.

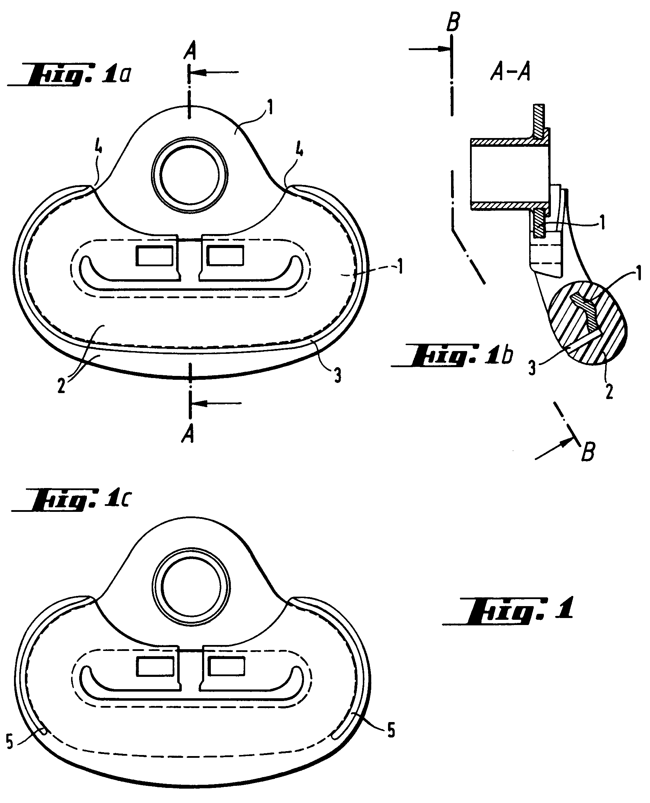

Fign. 1a, b, c zeigen in drei verschiedenen Einzelfiguren zwei Beispiele des Gurtumlenkbeschlages gemäß der Erfindung mit Aussparungen im Kunststoffteil, angebracht im Bereich der Außenkante an einer Seite des Gurtumlenkbeschlages:
Fig. 1a zeigt gesehen aus der Ebene B-B der Fig. 1b einen Gurtumlenkbeschlag in der Draufsicht. Die gestrichelten Linien lassen das Metallteil erkennen, das von einem Kunststoffteil bedeckt wird. Auf der gezeigten Seite verläuft entlang der Außenseite des Metallteiles (gestrichelte Linie) eine Nut in dem Kunststoffteil. Die gegenüberliegende, nicht gezeigte Seite weist diese Nut nicht auf. Die Nut-Enden reichen bis zur gegenüberliegenden Seite.
Fig. 1b zeigt den Gurtumlenkbeschlag im Querschnitt nach der Linie A-A der Fig. 1a. Die nutförmige Aussparung stößt auf die untere Kante des Metallteiles (seitlich zur Außenkante des Metallteiles).
Fig. 1c zeigt einen weiteren Gurtumlenkbeschlag analog Fig. 1a, wobei jedoch die Nut oder Aussparung in dem Kunststoffteil nicht durchgehend ausgebildet ist. Die Nut ist in zwei Teile geteilt und befindet sich in den beiden Außenbereichen des Metallteiles, wo sich die Schwindungsspannungen am stärksten bemerkbar machen.

Es bedeuten in Fig. 1:
- 1: Metallteil
- 2: Kunststoffteil
- 3: Nut oder Aussparung
- 4: Ende der Nut oder Aussparung
- 5: partielle Nut oder Aussparung

## Patentansprüche

1. Gurtumlenkbeschlag, enthaltend ein Metallteil und eine Kunststoffabdeckung, dadurch gekennzeichnet, daß die Kunststoffabdeckung mindestens eine durchgehende Aussparung im Bereich der Außenkante des Metallteiles aufweist.

2. Gurtumlenkbeschlag nach Anspruch 1, dadurch gekennzeichnet, daß die Aussparung in der Kunststoffabdeckung entlang der Seite und/oder der Außenkante des Metallteils verläuft und einen dünnwandigen Bereich in der Kunststoffabdeckung bildet.

3. Gurtumlenkbeschlag nach Anspruch 1 oder 2, dadurch gekennzeichnet, daß die Aussparung in der Kunststoffabdeckung entlang der Außenkante des Metallteiles verläuft und eine Unterbrechung in der Kunststoffabdeckung bildet.

4. Gurtumlenkbeschlag nach einem oder mehreren der Ansprüche 1 bis 3, dadurch gekennzeichnet, daß die Kunststoffabdeckung aus einem thermoplastischen Kunststoff besteht.

5. Gurtumlenkbeschlag nach einem odere mehreren der Ansprüche 1 bis 4, dadurch gekennzeichnet, daß die Kunststoffabdeckung aus Polyamid, Polyester oder Polyacetal besteht.

6. Gurtumlenkbeschlag nach einem oder mehreren der Ansprüche 1 bis 5, dadurch gekennzeichnet, daß die Kunststoffabdeckung aus einem im Spritzguß verarbeitbaren Kunststoff besteht und durch Umspritzen des Metallteiles hergestellt wird.

7. Gurtumlenkbeschlag nach einem oder mehreren der Ansprüche 1 bis 6, dadurch gekennzeichnet, daß die Aussparung die Form einer durchgehenden Nut aufweist.

8. Gurtumlenkbeschlag nach einem oder mehreren der Ansprüche 1 bis 7, dadurch gekennzeichnet, daß die Aussparung die Form einer unterbrochenen Nut aufweist.
